(19) Europäisches Patentamt
European Patent Office
Office européen des brevets

(11) Veröffentlichungsnummer: **0 027 202**
**B1**

(12) **EUROPÄISCHE PATENTSCHRIFT**

(45) Veröffentlichungstag der Patentschrift: **28.12.83**

(21) Anmeldenummer: **80105894.2**

(22) Anmeldetag: **29.09.80**

(51) Int. Cl.³: **C 08 G 18/08**, C 08 J 5/04, C 08 K 7/02, C 08 K 7/14

(54) **Verfahren zur Herstellung von faserverstärkten Formkörpern.**

(30) Priorität: **10.10.79 DE 2941051**

(43) Veröffentlichungstag der Anmeldung:
**22.04.81 Patentblatt 81/16**

(45) Bekanntmachung des Hinweises auf die Patenterteilung:
**28.12.83 Patentblatt 83/52**

(84) Benannte Vertragsstaaten:
**AT BE CH DE FR GB IT LI NL SE**

(56) Entgegenhaltungen:
**CH - A - 573 453**
**US - A - 3 248 370**

(73) Patentinhaber: **BAYER AG**
**Zentralbereich Patente, Marken und Lizenzen**
**D-5090 Leverkusen 1, Bayerwerk (DE)**

(72) Erfinder: **Recker, Klaus, Dr.**
**Wolfskaul 6**
**D-5000 Koeln 80 (DE)**
Erfinder: **Reinecke, Gerd, Ing. grad.**
**Eschenweg 5**
**D-5060 Bergisch-Gladbach 2 (DE)**
Erfinder: **Awater, Albert, Dr.**
**Zum Hahnenberg 54**
**D-5068 Odenthal (DE)**
Erfinder: **Grögler, Gerhard, Dr.**
**von Diergardt-Strasse 48**
**D-5090 Leverkusen 1 (DE)**
Erfinder: **Kraft, Karl Josef, Dr.**
**Heymannstrasse 38**
**D-5090 Leverkusen 1 (DE)**

**EP 0 027 202 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von faserverskstärkten Formkörpern

Die Erfindung betrifft ein Verfahren zur Herstellung von faserverstärkten Formkörpern auf Polyurethanbasis.

Faserverstärkte Formkörper können nach Verfahren des Standes der Technik mit einer Vielzahl unterschiedlicher synthetischer Polymerer hergestellt werden, wobei sich als besonders vorteilhaftes Verstärkungsmaterial Glasfasern erwiesen haben. Es ist z.B. bekannt, aus ungesättigte Polyester enthaltenden Harzen (im folgenden "UP-Harze" genannt) und Glasfasern lagerstabile Halbzeuge (Harzmatten, "Prepregs"; Preßmassen) herzustellen, die mit Hilfe beheizter Pressen verformt und zu Formkörpern sehr hoher Festigkeit und Steifigkeit ausgehärtet werden können. Dieses Verfahren hat jedoch mehrere Nachteile: So führen die üblicherweise als Lösungsmittel für die UP-Harze verwendeten vinylgruppenhaltigen Monomeren (z.B. Styrol) bei der radikalisch initiierten Polymerisation zu einer sehr hohen Vernetzungsdichte, die eine hohe Sprödigkeit und Kerbschlagempfindlichkeit des Formkörpers bewirkt. Überdies erschwert die Anwesenheit von Lösungsmitteln die Verarbeitung, da umfangreiche Maßnahmen zur Absaugung der Lösungsmitteldämpfe getroffen werden müssen und explosionsgeschützte Verarbeitungsanlagen erforderlich sind.

Zur Herstellung des Halbzeugs muß das UP-Harz eingedickt werden, damit beim späteren Heiz/Preß-Vorgang ein einwandfreier Transport der Verstärkungsfasern erfolgt. Hierzu werden dem Harz meist geringe Mengen eines Erdalkalioxids oder -hydroxids zugesetzt, das einen lanwiergen Reifeprozeß in Gang setzt, der üblicherweise 7—21 Tage dauert und in sogenannten "Reifeschränken" bei etwas erhöhter Temperatur erfolgen muß. Diese Zwischenlagerung erfordert einen erheblichen Zeitund Kapitalaufwand und beeinträchtigt die Wirtschaftlichkeit des Verfahrens.

Auch die Verstärkung von Polyurethan-Elastomeren mit Hilfe von Fasermaterialien ist bekannt. So können z.B. nach dem Spritzgieß- oder Reaktionsspritzgießverfahren glasfaserverstärkte Polyurethanformkörper hergestellt werden. Die mechanischen Eigenschaften, insbesondere die Biegesteifigkeit solcher Formkörper lassen sich jedoch nur in begrenztem Maße steigern, da aus verfahrenstechnischen Gründen die Länge des Fasermaterials ca. 1 bis 6 mm nicht übersteigen darf. Als besonders nachteilig muß angesehen werden, daß aufgrund der begrenzten Faserlänge der thermische Ausdehnungskoeffizient der verstärkten Polyurethan-Elastomeren immer noch ein Vielfaches des Ausdehnungskoeffizienten von Stahl beträgt.

In der DE—PS 968 566 wird ein Verfahren zur Herstellung hochmolekularer, vernetzter Kunststoffe beschrieben, bei welchem zunächst aus einem Hydroxylgruppen aufweisenden Polyester, einem Glykol und einem Unterschuß an Diisocyanat ein Zwischenprodukt hergestellt wird, das dann durch Umsetzung mit einem Überschuß eines Uretdiongruppen-haltigen Diisocyanats zu lagerstabilen Halbzeugen führt. Diese Halbzeugen können schließlich plastisch verformt und durch Temperatureinwirkung zu elastischen Formkörpern ausgehärtet werden.

Die in dieser Patentschrift beschriebenen Polyurethan-Elastomere sind überwiegend linear aufgebaut und besitzen zwar hohe Elastizität und Zähigkeit, reichen aber in ihrer Härte und Steifigkeit für viele Anwendungen nicht aus. Die Verwendung von faserförmigen Verstärkungsmaterial wird in DE—PS 968 566 nicht erwähnt. Zwar ließen sich Glasfasern mit einer Länge >6mm prinzipiell in das oben erwähnte Zwischenprodukt einarbeiten; die hohe Viskosität des Zwischenproduktes würde aber zum Einmischen des Fasermaterials und des für die Vernetzung notwendigen Ureditondiisocyanats Walzwerke oder Kneter erfordern, wie sie bei der Kautschukverarbeitung üblich sind. Bei einem solchen Einarbeiten des Fasermaterials würden jedoch verfahrensbedingt so hohe Scherkräfte auftreten, daß die Einzelfasern auf Bruchteile ihrer Ausgangslänge zermahlen werden, so daß die gewünschten Effekte der Versteifung einerseits und der Senkung des thermischen Ausdehnungskoeffizienten andererseits nicht mehr in vollem Umfang eintreten könnten.

Die schweizerische Patentschrift CH—PS 573 453 (DE—OS 2 164 381) der Anmelderin beschreibt ein Verfahren zur Herstellung von faserverstärkten, reversibel warmverformbaren harten Polyurethanen. Wenn auch die üblichen, auch mehrfunktionellen Polyhydroxyverbindungen als Ausgangsmaterialien genannt werden, so sollen diese nicht zu über 50 Gew.-%, bezogen auf die bifunktionellen Polyhydroxylverbindungen mitverwendet werden (Spalte 3, unten).

Derartige Mischungen haben nur eine sehr kurze Verarbeitungszeit bzw. Verformbarkeit, um sie anschließend thermisch in der Form auszuhärten. Bei weiterer Steigerung der Funktionalität verhindert praktisch die sofortige Verfestigung eine vernünftige, praktikable Verarbeitung solcher Massen. Die hohe Reaktionsgeschwindigkeit gilt hier übrigens auch für Polyisocyanate wie z.B. Naphthylendiisocyanat, da man die Reaktionsmischung in flüssiger Form einsetzt (Spalte 4, unter/Patentanspruch II). Die Endprodukte dieses Verfahrens sind reversibel thermoplastisch verformbare Formkörper.

Der Erdindung liegt die Aufgaße zugrunde, ein Verfahren zur Verfügung zu stellen, mit dessen Hilfe faserverstärkte Forkörper hoher Steifigkeit, guter Schlagzähigkeit und hoher Dimensionsstabilität in wirtschaftlich vertretbaren Zeiträumen, d.h. ohne langwierige Zwischenlagerung des Vorkörpers, hergestellt werden können.

Diese Aufgaße wird dem erdindungsgemäßen Verfahren gelöst.

Gegenstand der Erfindung ist ein Verfahren zur Herstellung von faserverstärkten Formkörpern auf

Polyurethanbasis durch stufenweise Umsetzung von Gemischen von Polyisocyanaten, Gemischen von höhermolekularen Polyhydroxylverbindungen und gegebenenfalls Gemischen von Kettenverlängerungsmitteln in Gegenwart eines faserförmigen Verstärkungsmaterials, Füllstoffen und Aktivatoren, dadurch gekennzeichnet, daß man

1. bei einer Reaktionstemperatur von 10 bis 50°C, vorzugsweise bei 20 bis 30°C,

a) 7 bis 35 Gew.-%, bevorzugt 10 bis 30 Gew.-%, bezogen auf die Summe der Komponenten a)—g), eines Polyisocyanats mit einem Schmelzpunkt oberhalb von 100°C, bevorzugt oberhalb von 125°C, und
b) 14 bis 35 Gew.-%, bevorzugt 17 bis 28 Gew.-%, bezogen auf die Summe der Komponenten a)—g), eines bei der Reaktionstemperatur flüssigen Polyisocyanats mit
c) 43 bis 62 Gew.-%, bevorzugt 48 bis 57 Gew.-%, bezogen auf die Summe der Komponenten a)—g), einer oder mehrerer, 2 bis 8, vorzugsweise 2 bis 4, besonders bevorzugt 2 oder 3 Hydroxylgruppen aufweisender Verbindungen mit einem Molgewicht von 300 bis 10 000, vorzugsweise 350 bis 8000, wobei Komponente c) vorzugsweise ein Gemisch darstellt aus
ca) 20 bis 60 Gew.-%, bevorzugt 25 bis 50 Gew.-%, bezogen auf die Summe der Komponenten a)—g), eines Polyols mit einem Molekulargewicht von 1000 bis 10 000, bevorzugt 2000 bis 8000 und
cb) 1 bis 30 Gew.-%, bevorzugt 2,5 bis 25 Gew.-%, eines Polyols mit einem Molekulargewicht von 300—950, bevorzugt 350—800, und
d) 3 bis 10 Gew.-%, bevorzugt 5 bis 8 Gew.-%, bezogen auf die Summe der Komponenten a)—g), eines 2 bis 4, vorzugsweise 2 oder 3, Hydroxylgruppen aufweisenden Kettenverlängerers mit einem Molekulargewicht von 62 bis 250, bevorzugt 76 bis 150, sowie gegebenenfalls
e) 0 bis 5 Gew.-%, bezogen auf die Summe der Komponenten a)—g), einer Verbindung mit 2 bis 4, vorzugsweise 2 Aminogruppen und einem Molekulargewicht unter 1000, vorzugsweise unter 200, bzw. einer dazu äquivalenten Menge Wasser, gegebenenfalls
f) 0 bis 5 Gew.-% eines Molekularsiebes vom Natriumaluminiumsilikattyp und gegebenenfalls
g) 0,1 bis 5 Gew.-% eines oder mehrerer Aktivatoren

gegebenenfalls stufenweise miteinander vermischt, wobei die Komponenten b)—e) bei der gewählten Reaktionstemperatur flüssig sind und eine mittlere Funktionalität an NCO-reaktiven Gruppen von 2,5 bis 3,5 aufweisen, das Polyisocyanat a) in den Komponenten b) bis e) suspendiert ist, und das Äquivalenzverhältnis zwischen NCO-Gruppen der Komponente b) zu gegenüber NCO-Gruppen reaktiven Wasserstoffatomen der Komponenten c)—e) zwischen 0,4:1 und 0,85:1, bevorzugt zwischen 0,5:1 und 0,8:1, besonders bevorzugt zwischen 0,6:1 und 0.7:1 und das Äquivalenzverhältnis zwischen NCO-Gruppen der Komponente a) zu gegenüber NCO-reaktiven Wasserstoffatomen der Komponenten c)—e) unter Berücksichtigung evtl. verkappter NCO-Gruppen zwischen 0,15:1 und 1,2:1, bevorzugt zwischen 0,2:1 und 0,8:1, besonders bevorzugt zwischen 0,3:1 und 0,5:1 liegt, mit der Maßgabe, daß die mittlere Funktionalität der Komponenten c)—e) mindestens 2,65 beträgt falls das erstgenannte Äquivalenzverhältnis ≤0,65:1 ist und maximal 3,0 beträgt, falls das Äquivalenzverhältnis ≥0,70:1 beträgt,

2. während der Polyadditionsreaktion der Komponenten a)—e) ein Fasermaterial mit einer Faserlänge von 10 bis 100 mm, bevorzugt 20 bis 60 mm zusetzt und
3. die in der Viskosität ansteigende Formmasse frühestens nach einer Stunde und spätestens nach 4 Tagen bei einer Temperatur oberhalb von 90°C, vorzugsweise zwischen 110 und 150°C, und einem Druck zwischen 20 und 150 bar unter Formgebund aushärtet.

Ber der Herstellung der Formmasse kommen als Komponente a) alle an sich bekannten Polyisocyanate (vorzugsweise Diisocyanate) mit einem Schemzpunkt oberhalb von 100°C, vorzugsweise zwischen 125 und 200°C, in Frage. Beispiele hierfür sind u.a. 1,4-Dichlor-2,5-diisocyanatobenzol, 1-Chlor-4-methoxy-2,5-diisocyanato-benzol, 1,3-Dimethoxy-4,6-diisocyanatobenzol, 3,3′-Dimethoxy-4,4′-diisocyanatobiphenyl, 2,5,2′,5′-Tetramethyl-4,4′-diisocyanatodiphenylmethan, Diphenylsulfon-4,4′-diisocyanat, Naphthylen-1,5-diisocyanat sowie das Harnstoffdiisocyanat aus 1 Mol Wasser und 2 Mol 2,4-Toluylendiisocyanat (s, DE—OS 2 902 469), wobei die drei letztgenannten Diisocyanate bevorzugt sind.

Bevorzugt sind erfindungsgemäß als feste, hochschmelzende Polyisocyanate auch eine Uretdiongruppe aufweisende Diisocyanate, wie sich durch an sich bekannte Dimerisierung der in der Polyurethanchemic bekannten Polyisocyanate entstehen. Besonders bevorzugt ist das dimere 2,4-Toluylendiisocyanat.

Das hochschmelzende Polyisocyanat wird vor seiner Verwendung vorzugsweise auf eine Teilchengröße <40 μm zerkleinert.

Als Isocyanatkomponente b) kommen im Prinzip alle an sich bekannten, bei der Reaktionstemperatur, vorzugsweise bei Raumtemperatur, flüssigen Polyisocyanate in Frage.

Es sind dies aliphatische, cycloaliphatische, araliphatische, aromatische und heterocyclische

Polyisocyanate, wie sie z.B. von W. Siefken in Justus Liebigs Annalen der Chemie, 562, Seiten 75 bis 136 beschrieben werden, beispielsweise solche der Formel

$$Q\ (NCO)_n$$

in der

n=2—4, vorzugsweise 2, und
Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen,
oder eien araliphatischen Kohlenwasserstoffrest mit 8—15, vorzugsweise 8—13 C-Atomen,

bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, 1-Isocyanato-3,3,5-trimethyl-5-isocyanatomethylcyclohexan, 2,4- und 2,6-Hexahydrotoluylen-diisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 2,4- und 2,6-Toluylendiisocyanat sowie beliebige Gemische dieser Isomeren, Diphenylmethan 2,4'- und/oder -4,4'-diisocyanat.

Ferner kommen beispielsweise erfindungsgemäß in Frage: Triphenylmethan-4,4',4"-triisocyanat, Polyphenyl-polymethylenpolyisocyanate, wie sich durch Anilin-Formaldehyd-Kondensation und anschließende Phosgenierung erhalten werden, m- und p-Isocyanatophenylsulfonyl-isocyanate, Carbodiimidgruppen aufweisende Polyisocyanate, wie sie in der DE—Patentschrift 1 092 007 sowie in den DE—OS en 2 504 400, 2 537 685 und 2 552 350 beschrieben werden, Norbornan-Diisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Estergruppen aufweisende Polyisocyanate, Umsetzungsprodukte der obengenannten Isocyanate mit Acetalen gemäß der DE—PS 1 072 385 und Polymere Fettsäureester enthaltende Polyisocyanate gemäß der US—PS 3 455 883.

Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat albeiten.

Besonders bevorzugt sind die bei Raumtemperatur flüssigen Polyphenyl-polymethylenpolyisocyanate.

Als Komponente c) werden beim Aufbau des OH-Präpolymeren bei der Reaktionstemperatur, vorzugsweise unterhalb von 30°C, flüssige Verbindungem mit 2 bis 8 Hydroxygruppen und einem Molekulargewicht zwischen 300 und 10 000, vorzugsweise ein Gemisch aus Polyolen mit einem Molekulargewicht zwischen 1000 und 10 000, bzw. zwischen 300 und 950, eingesetzt. Bevorzugte Komponente ca) sind Polyole vom Molekulargewicht 2000 bis 8000, insbesondere 3000 bis 6000, bevorzugte Komponente cb) Polyole vom Molekulargewicht 350 bis 800, insbesondere 400 bis 600, z.B. 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykol-ester. Als mehrwertige Alkohole kommen z.B. Ethylenglykol, Propylenglykol-(1,2) und -(1,3), Butylenglykol-(1,4) und -(2,3), Hexandiol-(1,6),

Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig entständige Carboxylgruppen aufweisen. Auch Polyester aus Lactonen, z.B. $\varepsilon$-Caprolacton, oder aus Hydroxycarbonsäuren, z.B. $\omega$-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Tetrahydrofuran, Epoxiden wie Ethylenoxid, Propylenoxid, Butylenoxid, Styroloxid oder Epichlorhydrin, mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyäther sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt.

Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z.B. Trioxan lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können.

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinsöl oder Kohlenhydrate, z.B. Stärke, sind verwendbar. Auch Anlagerungsprodukte von Alkylenoxiden an Phenol-Formaldehyd-Harze oder auch an Harnstoff-Formaldehyd-Harze sind erfindungsgemäß einsetzbar.

Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 und 2 544 195 ein Gemisch aus verschiedenen Polyhydroxylverbindungen (z.B. aus einem Polyether- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE—OS 2 620 487 durch Umsetzung mit polyfunktionellen Cyansäureestern Triazingruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Es ist aber auch möglich, eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sich z.B. durch Polymerisation von Styrol und Acrylnitril in Gegenwart von Polyethern oder Polycarbonatpolyolen erhalten werden, sind für das erfindungsgemäße Verfahren geeignet. Bei Verwendung von Polyetherpolyolen, welche durch Pfropfpolymerisation mit Vinylphosphonsäureestern sowie gegebenenfalls (Meth) acrylnitril, (Meth)acrylamid oder OH-funktionellen (Meth)acrylsäureestern modifiziert wurden, erhält man Kunststoffe von besonderer Flammwidrigkeit.

Bei der Verwendung von modifizierten Polyhydroxylverbindungen der oben gennanten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch,

Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 300—10 000, z.B. Mischungen von Polyethern und Polyestern, eingesetzt werden.

Für die Herstellung der Formmasse geeignete niedermolekulare Kettenverlängerungsmittel d sind beispielsweise:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol Glycerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, Dipropylenglykol, Dibutylenglykol, 4,4'-Dihydroxy-diphenylpropan, Di-hydroxymethyl-hydro-chinon, Ethanolamin, Diethanolamin, N-Methyldiethanolamin, Triethanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat in Gegenwart von Metallverbindungen als Katalysator und von zur Endiolbildung befähigten Verbindungen als Co-Katalysator entstehen. Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE—OS 2 638 759).

Für manche Zwecke ist es vorteilhaft, Polyole einzusetzen, welche Sulfonat- und/oder Phosphonatgruppen enthalten (DE—OS 2 719 372), vorzugsweise das Addukt von Bisulfit an Butendiol-1,4 bzw.d essen Alkoxylierungsprodukte.

Die als Komponente e) bei der Herstellung des OH-Präpolymers gegebenenfalls mitzuverwendenden Verbindungen mit mindestens zwei Aminogruppen sind z.B. aliphatische und/oder aromatische Diamine.

Erfindungsgemäß geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'- diaminodiphenylmethan, p-Xylylendiamin, Bis-(3-aminopropyl)-methylamin, Diamino-perhydroanthrazene (DE—OS 2 638 731) und cycloaliphatische Triamine gemäß DE—OS 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydrycrylsäure und Terephthalsäure; Semicarbazido-alkylen-hydrazide wie z.B. β-Semicarbazidopropionsäurehydrazid (DE—OS 1 770 591), Semicarbazido-alkylencarbazinester wie z.B. 2-Semicarbazidoethylcarbazinester (DE—OS 1 918 504) oder auch Amino-semicarbazid-Verbindungen wie z.B. β-Aminoethyl-semicarbazido-carbonat (DE—OS 1 902 931). Zur Steuerung ihrer Reaktivität können die Aminogruppen ganz oder teilweise durch Aldimin- bzw. Ketimin-Gruppen blockiert sein (US—PS 3 734 894; DE—OS 2 637 115).

Als Beispiele für aromatische Diamine seien Bisanthranilsäureester gemäß den DE—OS—en 2 040 644 und 2 160 590; 3,5- und 2,4-Diaminobenzoesäureester gemäß DE—OS 2 025 900, die in den DE—OS—en 1 803 635, 2 040 650 und 2 160 589 beschriebenen estergruppenhaltigen Diamine, die Ethergruppen aufweisende Diamine gemäß DE—OS—en 1 770 525 und 1 809 172, gegebenenfalls in 5-Stellung substituierte 2-Halogen-1,3-phenylendiamine (DE—OS—en 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide, Diaminodiphenyldithioether, durch Alkylthiogruppen substituierte aromatische Diamine, Diaminobenzolphosphonsäureester, Sulfonat- oder Carboxylatgruppen enthaltende aromatische Diamine sowie die in der DE—OS 2 635 400 aufgeführten hochschmelzenden Diamine genannte. Beispiele für aliphatisch-aromatische Diamine sind die Aminoalkylthioaniline gemäß DE—OS 2 734 574.

Als Natriumaluminosilikate können erfindungsgemäß z.B. die als Molekularsiebe im Handel befindlichen Zeolithe eingesetzt werden.

Erfindungsgemäß geeignete Aktivatoren sind Polyurethankatalysatoren der an sich bekannten Art, z.B. tertiäre Amine, wie Triethylamin, Tributylamin, N-Methyl-morpholin, N-Ethyl-morpholin, N,N,N,',N'-Tetramethyl-ethylendiamin, Pentamethyl-diethylentriamin und höhere Homologe (DE—OS—en 2 624 527 und 2 624 528), 1,4-Diazabicyclo-(2,2,2)-octan, N-Methyl-N'-dimethylaminoethyl-piperazin, Bis-(dimethylaminoalkyl)-piperazine, N,N,-Dimethylbenzylamin, N,N,-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-β-phenyl-ethylamin, 1,2-Dimethylimidazol, 2-Methylimidazol, monocyclische und bicyclische Amidine (DE—OS 1 720 633), Bis-(dialkylamino) alkyl-äther sowie Amidgruppen (vorzugsweise Formamidgruppen) aufweisende tertiäre Amine gemäß den DE—OS—en

2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyldiethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE—OS 2 732 292.

Als Katalysatoren kommen ferner Silaamine mit Kohlenstoff-Silizium-Bindungen, wie sie z.B. in der DE—Patentschrift 1 229 290 beschrieben sind, in Frage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE—OS 1 769 043).

Die Reaktion zwischen NCO-Gruppen und Zerewitinoffaktiven Wasserstoffatomen wird auch durch Lactame und Azalactame start beschleunigt.

Erfindungsgemäß können auch organische Metallverbindungen, insbesondere organische Zinnverbindungen als Katalysatoren, verwendet werden. Als organische Zinnverbindungen kommen neben schwefelhaltigen Verbindungen wie Di-n-octyl-zinn-mercaptid (DE—AS 1 769 367) vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE—OS—en 2 434 183, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Auch Reaktionsverzögerer können gegebenenfalls mitverwendet werden, z.B. sauer reagierende Stoffe wie Salzsäure oder organische Säurehalogenide, ferner Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungsund Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden Zusatzstoffen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Als Fasermaterialien kommen alle an sich bekannten anorganischen und/oder organischen faserförmigen Verstärkungsmaterialien in Betracht wie z.B. Glasfasern (vorzugsweise in Längen zwischen 20 und 60 mm), Graphitfasern und Asbestfasern oder Fasermaterialien, die von einem organischen Polymeren stammen, wie z.B. von einem Polyester, Polyethylenterephthalat oder einem Polyamid, wie Polyhexamethylenadipamid oder Polycaprolactam. Diese Fasermaterialien können z.B. als Stoff, Matte, Band, Seil, durchgehende Fasern oder zerhackte Stapelfasern vorliegen. Bevorzugt sind erfindungsgemäß Glasfasern, die in an sich bekannter Weise mit Schlichten ausgerüstet sind, welche den Fasern Affinität zu Polyurethanen verleihen (siehe z.B. DE—AS 2 436 657 und 2 426 654).

Die einzubauende Fasermaterialmenge hängt von der gewünschten Verbesserung der mechanischen Eigenschaften des Formkörpers ab. Im allgemeinen werden 5 bis 60 Gew.-% Fasermaterial, bezogen auf das Gesamtgewicht des faserverstärkten Körpers, angewendet.

Zusätzlich zu den Fasermaterialien können, wie schon erwähnt, auch andere Zusatzstoffe, z.B. teilchenförmige Füllstoffe wie Kreide, Ruß, Ton, Eisenoxid, Glimmer, kieselsäurehaltige Materialien, Titandioxid und Farbpigmente, Gleit- und Trennmittel wie Zn-Stearat, UV-Absorber etc., mitverwendet werden.

Durchführung des erfindungsgemäßen Verfahrens

Komponente a) wird vorzugsweise in Komponente b) suspendiert, kann aber auch in dem Gemisch der Komponente c) bis e) sowie gegebenenfalls Molekularsieb und Aktivator angepastet werden, bevor Komponente b) zugesetzt wird. (Vorzugsweise wird jedoch der Aktivator möglichst spät zugesetzt, damit die Reaktion nicht zu schnell verläuft). Das Äquivalenzverhältnis von Komponente b) zu der Summe der Komponenten c)—e) und die mittlere Funktionalität der Komponenten c)—e) an gegenüber Isocyanaten reaktiven Gruppen sind voneinander abhängig:

Ein relativ hoher Verzweigungsgrad macht eine geringere Vorverlängerung des Polyolgemisches mit Isocyanat (gleichbedeutend mit niedrigem Äquivalenzverhältnis) erforderlich, um der Formmasse

einen Viskositätswert zur verleihen, der für die Weiterverarbeitung günstig ist. Umgekehrt muß eine niedrige Verzweigung durch ein höheres Aquivalenzverhältnis kompensiert werden. Im allgemeinen soll bei einem Äquivalenzverhältnis ≦0,65:1 die mittlere Funktionalität ≧2,65 sein; bei einem Äquivalenzverhältnis ≧0,70:1 beträgt die mittlere Funktionalität ≦3,0. Durch Vermischen der Suspension von Komponente a) in Komponente b) mit dem Gemisch der übrigen Komponenten bzw. durch Vermischen der Suspension von Komponente a) in dem Gemisch der Komponente c)—e) sowie gegebenenfalls Molekularsieb und Aktivator mit Komponente b) wird die Polyadditionsreaktion zwischen den H-aciden Verbindungen und dem in flüssiger Phase vorliegenden Polyisocyanat b) gestartet.

Nun können die Fasermaterialien dank der relativ niedrigen Viskosität der Reaktionsmischung nach der für UP-Harze üblichen Technologie eingearbeitet werden. Die Reifezeit bis zum Erreichen einer preßähigen Konsistenz der Formmasse beträgt je nach Temperatur, Aktivatormenge und Auswahl der Rohstoffe eine halbe Stunde bis 2 Tage. Nach spätestens 4 Tagen müssen die Formmassen durch Einwirkung von Temperaturen oberhalb 90°C, vorzugsweise zwischen 110 und 150°C, und Drücken zwischen 20 und 150 bar verformt und innerhalb von 1 bis 10 Minuten zu Formkörpern ausgehärtet werden, die bei einer vergleichsweise hohen Biegesteifigkeit eine gute Schlagzähigkeit und Weiterreißfestigkeit besitzen.

Die folgenden Beispiele erläutern die vorliegende Erdindung. Wenn nicht anders vermerkt, sind Mengenangaben als Gewichtsteile bzw. Gewichtsprozente zu verstehen.

Beispiel 1

Komponente I

- 50 Teile eines verzweigten Polypropylenglykols mit endständigen primären OH-Gruppen (Mol-Gew. 4800; Funktionalität=3)
- 40 Teile eines verzweigten Polypropylenglykols (Mol-Gew. 450; Funktionalität=3)
- 10 Teile Triethanolamin
- 5 Teile einer 50 %igen Paste von Na-Al-Silikat in einem teilweise verzweigten Polypropylenglykol (Mol-Gew. 3700; Funktionalität=2,75)
- 2 Teile Polypropylenglykoladipat (Mol-Gew. 820; Funktionalität=2)
- 100 Teile Calciumcarbonat (Kreide)
- 1 Teil Bleisalz der Phenyl-ethyl-dithiocarbaminsäure.

Mittlere Funktionalität der gegenüber Isocyanat reaktive Gruppen aufweisenden Verbindungen von Komponente I: 2,99

Komponente II

34,1 Teile eines technischen Diphenylmethandiisocyanat-Gemisches (NCO-Gehalt: 31%), bestehend aus 65% 4,4'-Diphenylmethandiisocyanat, 20% 2,4'-Diphenylmethandiisocyanat und 15% an mehrkernigen Polyphenylpolymethylen-polyisocyanaten. Äquivalenzverhältnis II/I=0,5:1

Komponente III

35,3 Teile dimeres 2,4-Toluylendiisocyanat.

Komponente IV

120 Teile Glasrovings aus einer handelsüblichen Faser mit einem Durchmesser von 11 μm, die gemäß Beispiel 1 von DE—AS 2 426 657 beschlichtet ist; auf 52 mm Länge geschnitten.

Herstellung des faserverstärkten Formkörpers

Zunächst werden die Komponenten I, II und III über geeignete Dosier- und Mischaggregate homogen miteinander im angegebenen Verhältnis vermischt. Die reaktive Masse wird auf einer Polyethylenfolie in 1 bis 2 mm Dicke ausgerakelt. Die Topf- bzw. Rakelzeit liegt bei etwa 2 Minuten.

Auf die ausgerakelte Schicht werden dann die auf 52 mm Länge geschnittenen Glas-Rovings gestreut und mit einer zweiten, ebenfalls auf Polyethylenfolie gerakelten Schicht des Gemisches aus I, II und III abgedeckt. Mittels geriffelter Andruckwalzen wird daraufhin für eine einwandfreie Durchtränkung der Glasfasern gesorgt. Nach einer halben Stunde kann die Polyethylenfolie von der Harzmatte abgezogen werden.

Um Formteile herzustellen, werden der jeweiligen Form entsprechende Teile aus der Matte herausgeschnitten und bei 120°C und 75 bar verpreßt. Die Aushärtung erfolgt je nach Schichtstärke in 3 bis 10 Minuten. Das Fertigteil kann anschließend heiß entformt werden. Es ist auch möglich, mehrere Schichten übereinander in die Form einzulegen, da das Material beim Preßvorgang homogen ineinanderfließt. Auch bei längeren Fließwegen ist ein einwandfreier Transport der Glasfasern bis in die äußersten Ecken des Formteils gewährleistet.

Die Lagerstabilität der Formpreßmasse beträgt bei Raumtemperatur nur wenige Stunden. Durch Lagerung bei niedrigeren Temperaturen kann der Verarbeitungszeitraum verlängert werden.

An die wie oben beschrieben hergestellten ausgehärteten Prüfplatten wurden folgende Eigenschaften gemessen:

| | ohne Glasfaser | mit Glasfaser |
|---|---|---|
| Dichte nach DIN 53 479 | 1,41 | 1,65 $Mg/m^3$ |
| Zugfestigkeit nach DIN 53 504 | 22,3 | 132,5 MPa |
| Reißdehnung nach DIN 53 504 | 49 | 4,0 % |
| Biegemodul nach ASTM D 790-71 | 450 | 8200 MPa |
| Längenausdehnungskoeffizient nach VDE 0304/Teil 1 | 340 | 10 $10^{-6}$ grd-1 |

Beispiel 2

Komponente I

70 Teile eines verzweigten Polypropylenglykols mit endständigen primären OH-Gruppen (Mol-Gew. 6000; Funktionalität=3)
30 Teile eines verzweigten Polypropylenglykols (Mol-Gew. 45; Funktionalität=3)
5 Teile 1,4-Butandiol
5 Teile Trimethylolpropan
5 Teile Na-Al-Silikat als 50 %ige Paste in einem teilweise verzweigten Polypropylenglykol (Mol-Gew. 3700; Funktionalität=2,75)
2 Teile Polypropylenglykoladipat (Mol-Gew. 820)
100 Teile Calciumcarbonat (Kreide)
1 Teil Diethyl-toluylendiamin
1 Teil Bleisalz der Phenyl-ethyl-dithiocarbaminsäure.

Mittlere Funktionalität der gegenüber Isocyanaten reaktive Gruppen aufweisenden Verbindungen von Komponente I: 2,65.

Komponente II

42,9 Teile des technischen Diphenylmethandiisocyanat-Gemischs aus Beispiel 1 Äquivalenzverhältnis II/I=0,67:1
23,7 Teile dimeres 2,4-Toluylendiisocyanat

Komponente IV

80 Teile der Glas-Rovings aus Beispiel 1.

Die Verarbeitung dieser Rezeptur erfolgt auf die gleiche Weise wie unter Beispiel 1 beschrieben. Die Preßmasse kann 24 Stunden verarbeitet werden.

| Prüfwerte | ohne Glasfaser | mit Glasfaser |
|---|---|---|
| Dichte nach DIN 53 479 | 1,38 | 1,52 $Mg/m^3$ |
| Zugfestigkeit nach DIN 53 504 | 12,9 | 37,7 MPa |
| Reißdehnung nach DIN 53 504 | 72 | 11,2 % |
| Weiterreißfestigkeit nach DIN 53 515 | 55 | 275 KN/m |
| Biegemodul nach ASTM D 790-71 | 300 | 1800 MPa |
| Kälteschlagzähigkeit bei —30°C nach DIN 54 453 | — | 80 $KJ/m^2$ |

**Patentansprüche**

1. Verfahren zur Herstellung von faserverstärkten Formkörpern auf Polyurethanbasis durch stufenweise Umsetzung von Gemischen von Polyisocyanaten, Gemischen von höhermolekularen Polyhydroxylverbindungen und gegebenenfalls Gemischen von Kettenverlängerungsmitteln in Gegenwart eines faserförmigen Verstärkungsmaterials, Füllstoffen und Aktivatoren, dadurch gekennzeichnet, daß man

1. in einer ersten Stufe bei einer Reaktionstemperatur von 10 bis 50°C

a) 7 bis 35 Gew.-%, bezogen auf die Summe der Komponenten a) bis g), eines Polyisocyanats mit einem Schmelzpunkt oberhalb von 100°C und
b) 14 bis 35 Gew.-%, bezogen auf die Summe der Komponenten a) bis g), eines bei der Reaktionstemperatur flüssigen Polyisocyanats mit
c) 43 bis 62 Gew.-%, bezogen auf die Summe der Komponenten a) bis g), einer oder mehrerer, 2 bis 8 Hydroxylgruppen aufweisender Verbindungen mit einem Molekulargewicht von 300 bis 10 000 und
d) 3 bis 10 Gew.-%, bezogen auf die Summe der Komponenten a) bis g), eines 2 bis 4 Hydroxylgruppen aufweisenden Kettenverlängerungsmittels mit einem Molekulargewicht von 62 bis 250 sowie gegebenenfalls

e) 0 bis 5 Gew.-%, bezogen auf die Summe der Komponenten a) bis g), einer Verbindung mit 2 bis 4 Aminogruppen und einem Molekulargewicht unter 1000 bzw. einer dazu äquivalenten Menge Wasser, gegebenenfalls

f) 0 bis 5 Gew.-%, bezogen auf die Summe der Komponenten a) bis g) eines Molekularsiebes vom Natriumaluminiumsilikattyp und gegebenenfalls

g) 0,1 bis 5 Gew.-%, bezogen auf die Summe der Komponenten a) bis g), eines oder mehrerer Aktivatoren

gegebenenfalls stufenweise miteinander vermischt, wobei die Komponenten b) bis e) bei der gewählten Reaktionstemperatur flüssig sind und eine mittlere Funktionalität an NCO-reaktiven Gruppen von 2,5 bis 3,5 aufweisen, das Polyisocyanat a) in den Komponenten b) bis e) suspendiert ist, und das Äquivalenzverhältnis zwischen NCO-Gruppen der Komponente b) zu gegenüber NCO-Gruppen reaktiven Wasserstoffatomenkomponenten c) bis e) zwischen 0,4:1 und 0,85:1 und das Äquivalenzverhältnis zwischen NCO-Gruppen der Komponente a) zu gegenüber NCO-reaktiven Wasserstoffatomen der Komponenten c) bis e) unter Berücksichtigung eventuell verkappter NCO-Gruppen zwischen 0,15:1 und 1,2:1 liegt, mit der Maßgabe, daß die mittlere Funktionalität der Komponenten c) bis e) mindestens 2,65 beträgt, falls das erstgenannte Äquivalenzverhältnis $\leqq$0,65:1 ist und maximal 3,0 beträgt, falls das Äquivalenzverhältnis $\geqq$0,70:1 ist,

2. in einer zweiten Stufe während der Polyadditionsreaktion der Komponenten a) bis e) ein Fasmaterial mit einer Faserlänge von 10 bis 100 mm zusetzt und
3. die in der Viskosität ansteigende Formmasse frühestens nach einer Stunde und spätestens nach 4 Tagen in einem dritten Schritt bei einer Temperatur oberhalb von 90°C und einem Druck zwischen 20 und 150 bar unter Formgebung aushärtet.

2. Verfahren nach Anspruch 1, dadurch gekennzeichnet, daß als Komponente c) in der ersten Verfahrensstufe ein Gemisch aus

ca) 20 bis 60 Gew.-%, bezogen auf die Summe der Komponenten a) bis g), eines Polyols mit einem Molekulargewicht von 1000 bis 10 000 und
cb) 1 bis 30 Gew.-% eines Polyols mit einem Molekulargewicht von 300 bis 950 eingesetzt wird.

3. Verfahren nach Anspruch 2, dadurch gekennzeichnet, daß als Komponente c) ein Gemisch aus

ca) 25 bis 50 Gew.-%, bezogen auf die Summe der Komponenten a) bis g), eines Polyols mit einem Molekulargewicht von 2000 bis 8000 und

cb) 2,5 bis 25 Gew.-%, bezogen auf die Summe der Komponenten a) bis g), eines Polyols mit einem Molekulargewicht von 350 bis 800

eingesetzt wird.

4. Verfahren nach Anspruch 1 bis 3, dadurch gekennzeichnet, daß Komponente c) aus 2 bis 4 Hydroxylgruppen aufweisenden Verbindungen besteht.

5. Verfahren nach Anspruch 4, dadurch gekennzeichnet, daß Komponente c) aus Verbindungen mit 2 oder 3 Hydroxylgruppen besteht.

6. Verfahren nach Anspruch 1 bis 5, dadurch gekennzeichnet, daß als Komponente a) 10 bis 30 Gew.-%, bezogen auf die Summe der Komponenten a) bis g), eines Polyisocyanats mit einem Schmelzpunkt oberhalb von 125°C eingesetzt werden.

7. Verfahren nach Anspruch 1 bis 6, dadurch gekennzeichnet, daß als Komponente b) 17 bis 28 Gew.-%, bezogen auf die Summe der Komponenten a) bis g), eines bei Raumtemperatur flüssigen Polyisocyanats eingesetzt werden.

8. Verfahren nach Anspruch 1 bis 7, dadurch gekennzeichnet, daß als Komponente d) 5 bis 8 Gew.-%, bezogen auf die Summe der Komponenten a) bis g), einer 2 oder 3 Hydroxylgruppen aufweisenden Verbindung mit einem Molekulargewicht von 76 bis 150 eingesetzt werden.

9. Verfahren nach Anspruch 1 bis 8, dadurch gekennzeichnet, daß das Äquivalenzverhältnis zwischen NCO-Gruppen der Komponente b) zu gegenüber NCO-Gruppen reaktiven Wasserstoffatomen der Komponenten c) bis e) zwischen 0,5:1 und 0,8:1 und das Äquivalenzverhältnis zwischen NCO-Gruppen der Komponente a) zu gegenüber NCO-reaktiven Wasserstoffatomen der Komponenten c) bis e) unter Berücksichtigung eventuell verkappter NCO-Gruppen zwischen 0,2:1 und 0,8:1 liegt.

10. Verfahren nach Anspruch 1 bis 9, dadurch gekennzeichnet, daß als Fasermaterial Glasfasern mit einer Länge von 20 bis 60 mm eingesetzt werden.

**Revendications**

1. Procédé de production de pièces moulées à base de polyuréthanne armées de fibres, par réaction par étapes de mélanges de polyisocayanates, de mélanges de composés polyhydroxyliques de poids moléculaire élevé et, le cas échéant, de mélanges d'agents d'allongement de chaîne, en présence d'une matière fibreuse de renforcement, de charges et d'activateurs, caractérisé en ce que:

1. On mélange ensemble le cas échéant graduellement dans une première étape, à une température de réaction de 10 à 50°C

a) 7 à 35% en poids, par rapport à la somme des composants a) à g), d'un polyisocyanate ayant un point de fusion supérieur à 100°C et
b) 14 à 35% en poids, par rapport à la somme des composants a) à g), d'un polyisocyanate liquide à la température de réaction avec
c) 43 à 62% en poids, par rapport à la somme des composants a) à g), d'un ou plusieurs composés porteurs de 2 à 8 groupes hydroxyle, ayant un poids moléculaire de 300 à 10 000 et
d) 3 à 10% en poids, par rapport à la somme de composants a) à g), d'un agent d'allongement de chaîne portant 2 à 4 groupes hydroxyle, ayant un poids moléculaire de 62 à 250 ainsi que le cas échéant,
e) 0 à 5% en poids, par rapport à la somme des composants a) à g), d'un composé portant 2 à 4 groupes amino et ayant un poids moléculaire inférieur à 1000 ou d'une quantité équivalente d'eau, éventuellement
f) 0 à 5% en poids, par rapport à la somme des composants a) à g), d'un tamis moléculaire du type d'un silicate de sodium et d'aluminium et le cas échéant,
g) 0,1 à 5% en poids, par rapport à la somme des composants a) à g), d'un ou plusieurs activateurs,

les composants b) à e) étant liquides à la température choisie de réaction et présentant une fonctionnalité moyenne en groupes NCO réactifs de 2,5 à 3,5, le polyisocyanate a) est en suspension dans les composants b) à e) et le rapport d'équivalence entre les groupes NCO du composant b) et les composants c) à e) portant des atomes d'hydrogène aptes à réagir avec des groupes NCO étant compris entre 0,4:1 et 0,85:1 et le rapport d'équivalence entre les groupes NCO du composant a) et les atomes d'hydrogène aptes à réagir avec des groupes NCO des composants c) à e), en considérant les groupes NCO éventuellement protégés, étant compris entre 0,15:1 et 1,2:1, sous réserve que la fonctionnalité moyenne des composants c) à e) s'élève au moins à 2,65, au cas où le rapport d'équivalence mentionné en premier lieu est inférieur ou égal à 0,65:1, et s'élève au maximum à 3,0 au cas où le rapport d'équivalence est supérieur ou égal à 0,70:1,

2. dans une seconde étape, on ajoute pendant la réaction de polyaddition des composants a) à e) une matière fibreuse ayant une longueur de fibre de 10 à 100 mm et
3. la matière à mouler dont la viscosité s'élève est durcie par compression au plus tôt au bout d'une heure et au plus tard au bout de 4 jours dans une troisième étape à une température supérieure à 90°C et sous une pression comprise entre 20 et 150 bars.

2. Procédé suivant la revendication 1, caractérisé en ce qu'on utilise comme composant c) dans la première étape un mélange formé

ca) de 20 à 60% en poids, par rapport à la somme des composants a) à g), d'un polyol ayant un poids moléculaire de 1000 à 10 000 et
cb) 1 à 30% en poids d'un polyol ayant un poids moléculaire de 300 à 950.

3. Procédé suivant la revendication 2, caractérisé en ce qu'on utilise comme composant c) un mélange

ca) de 25 à 50% en poids, par rapport à la somme des composants a) à g), d'un polyol ayant un poids moléculaire de 2000 à 8000 et
cb) de 2,5 à 25% en poids, par rapport à la somme des composants a) à g), d'un polyol ayant un poids moléculaire de 350 à 800.

4. Procédé suivant les revendications 1 à 3, caractérisé en ce que le composant c) consiste en composés portant 2 à 4 groupes hydroxyle.

5. Procédé suivant la revendication 4, caractérisé en ce que le composant c) consiste en composés portant 2 ou 3 groupes hydroxyle.

6. Procédé suivant les revendications 1 à 5, caractérisé en ce qu'on utilise comme composant a) 10 à 30% en poids, par rapport à la somme des composants a) à g), d'un polyisocyanate ayant un point de fusion supérieur à 125°C.

7. Procédé suivant les revendications 1 à 6, caractérisé en ce qu'on utilise comme composants b) 17 à 28% en poids, par rapport à la somme des composants a) à g), d'un polyisocyanate liquide à la température ambiante.

8. Procédé suivant les revendications 1 à 7, caractérisé en ce qu'on utilise comme composants d) 5 à 8% en poids, par rapport à la somme des composants a) à g), d'un composé porteur de 2 ou 3 groupes hydroxyle, ayant un poids moléculaire de 76 à 150.

9. Procédé suivant les revendications 1 à 8, caractérisé en ce que le rapport d'équivalence entre les groupes NCO du composant b) et les atomes d'hydrogène réactifs envers des groupes NCO des composants c) à e) est compris entre 0,5:1 et 0,8:1 et le rapport d'équivalence entre les groupes NCO du composant a) et des atomes d'hydrogène réactifs envers des groupes NCO des composants c) à e), en considérant les groupes NCO éventuellement protégés, se situe entre 0,2:1 et 0,8:1.

10. Procédé suivant les revendications 1 à 9, caractérisé en ce qu'on utilise comme matière fibreuse des fibres de verre ayant une longueur de 20 à 60 mm.

**Claims**

1. Process for the production of fibre-reinforced moulded products based on polyurethanes by the stepwise reaction of mixtures of polyisocyanates, mixtures of relatively high molecular weight polyhydroxyl compounds and, optionally, mixtures of chain-lengthening agents in the presence of a fibrous reinforcing material, fillers and activators, characterised in that

1. in a first stage, at a reaction temperature of 10 to 50°C,

a) 7 to 35% by weight, based on the sum of components a) to g), of a polyisocyanate having a melting point above 100°C and
b) 14 to 35% by weight, based on the sum of components a) to g), of a polyisocyanate which is liquid at the reaction temperature,

are mixed, optionally step-wise, with

c) 43 to 62% by weight, based on the sum of components a) to g) of one or more compounds having molecular weights of 300 to 10,000 and containing 2 to 8 hydroxyl groups and
d) 3 to 10% by weight, based on the sum of components a) to g), of a chain-lengthening agent having a molecular weight of 62 to 250 and containing 2 to 4 hydroxyl groups, and optionally
e) 0 to 5% by weight, based on the sum of components a) to g), of a compound containing 2 to 4 amino groups and having a molecular weight below 1,000 or an equivalent quantity of water, optionally
f) 0 to 5% by weight, based on the sum of components a) to g), of a molecular sieve of the sodium aluminium silicate type, and optionally
g) 0.1 to 5% by weight, based on the sum of components a) to g) of one or more activators,

components b) to e) being liquid at the chosen reaction temperature and having an average functionality of NCO-reactive groups of 2.5 to 3.5, the polyisocyanate a) being suspended in components b) to e), and the equivalent ratio of NCO groups in component b) to NCO-reactive hydrogen atoms in components c) to e) being between 0.4:1 and 0.85:1 and the equivalent ratio of NCO groups of component a) to NCO-reactive hydrogen atoms of components c) to e), taking into account any masked NCO groups, being between 0.15:1 and 1.2:1, with the proviso that the average functionality of components c) to e) is at least 2.65, when the first-mentioned equivalent ratio $\leqq 0.65:1$ and not more than 3.0, when the equivalent ratio $\geqq 0.70:1$,

2. in a second stage, a fibre material having a fibre length of 10 to 100 nm is added during the polyaddition reaction of components a) to e) and
3. the moulding compound, which is increasing in viscosity, is moulded and cured in a third stage at a temperature above 90°C and a pressure between 20 and 150 bar not earlier than after 1 hour and not later than after 4 days.

2. Process according to Claim 1, characterised in that component c) used in the first stage of the process is a mixture of

ca) 20 to 60% by weight, based on the sum of components a) to g), of a polyol having a molecular weight of 1,000 to 10,000 and
cb) 1 to 30% by weight of a polyol having a molecular weight of 300 to 950.

3. A process according to Claim 2, characterised in that a mixture of

ca) 25 to 50% by weight, based on the sum of components a) to g), of a polyol having a molecular weight of 2,000 to 8,000 and

cb) 2.5 to 25% by weight, based on the sum of components a) to g), of a polyol having a molecular weight of 350 to 800,

is used as component c).

4. Process according to Claim 1 to 3, characterised in that component c) consists of compounds containing 2 to 4 hydroxyl groups.

5. Process according to Claim 4, characterised in that component c) consists of compounds having 2 to 3 hydroxyl groups.

6. Process according to Claim 1 to 5, characterised in that 10 to 30% by weight, based on the sum of components a) to g), of a polyisocyanate having a melting point above 125°C, are used as component a).

7. Process according to Claim 1 to 6, characterised in that 17 to 28% by weight, based on the sum of components a) to g), of a polyisocyanate which is liquid at room temperature, are used as component b).

8. Process according to Claim 1 to 7, characterised in that 5 to 8% by weight, based on the sum of components a) to g) of a compound having a molecular weight of 76 to 150 and having 2 to 3 hydroxyl groups, are used as component d).

9. Process according to Claim 1 to 8, characterised in that the equivalent ratio of NCO groups in component b) to NCO-reactive hydrogen atoms in components c) to e) is between 0.5:1 and 0.8:1 and the equivalent ratio of NCO groups in component a) to NCO-reactive hydrogen atoms in components c) to e), taking into account any masked isocyanate groups, is between 0.2:1 and 0.8:1.

10. Process according to Claim 1 to 9, characterised in that glass fibres having a length of 20 to 60 mm are used as the fibre material.